# FASCICULE DE BREVET EUROPEEN

(11) **EP 2 024 219 B1**
(45) Date de publication et mention de la délivrance du brevet: **25.11.2009**
(21) Numéro de dépôt: 07766066.0
(22) Date de dépôt: 16.05.2007
(51) Int. Cl.: B62D 1/20, B62D 1/10

(54) **SYSTEME DE VERROUILLAGE D'UN PREMIER ARBRE PAR RAPPORT A UN DEUXIEME ARBRE SUPPRIMANT LES JEUX ENTRE LESDITS ARBRES**
SYSTEM ZUR ARRETIERUNG EINES SCHAFTS IN EINER BESTIMMTEN LAGE IM VERHÄLTNIS ZU EINEM ANDEREN SCHAFT UNTER ELIMINIERUNG DES SPIELRAUMS ZWISCHEN DEN BEIDEN SCHÄFTEN
SYSTEM FOR LOCKING A FIRST SHAFT WITH RESPECT TO A SECOND SHAFT ELIMINATING CLEARANCES BETWEEN SAID SHAFTS

(30) Priorité: 17.05.2006 FR 0604434
(43) Date de publication de la demande: 18.02.2009
(73) Titulaire: ZF Systemes de Direction Nacam, S.A.S., 41100 Vendome (FR)
(72) Inventeur: LAISEMENT, André, 41290 La Chapelle Encherie (FR); EMERY, Vincent, 41310 Saint Amand Longpre (FR); MILLET, Pascal, 41100 Vendome (FR)
(74) Mandataire: Novagraaf IP
(86) Numéro de dépôt international: PCT/FR2007/051292
(87) Numéro de publication internationale: WO 2007/132133

(56) Documents cités:
- FR-A1- 2 618 501

## Description

L'invention concerne un système de verrouillage en rotation et en translation de la coopération d'un premier arbre avec un deuxième arbre ainsi que l'utilisation d'un tel système pour la connexion d'une colonne de direction sur un pignon de crémaillère d'un véhicule automobile et pour la connexion d'un moyeu de volant de direction à un arbre de colonne de direction de véhicule.

Il est connu des systèmes de verrouillage en rotation et en translation entre un premier arbre et un deuxième arbre afin de transmettre les efforts de l'un vers l'autre en les faisant coopérer en rotation et en translation. Le document FR-2 618 501 décrit par exemple un tel système.

Le système décrit dans ce document permet d'assurer le verrouillage du premier arbre sur l'autre sans moyens de serrage nécessitant des outils particuliers. Un tel système est particulièrement avantageux pour des arbres dont la jonction est peu accessible pour placer ces outils et serrer les moyens de serrage de façon suffisante pour assurer une bonne transmission des efforts des arbres entre eux. Ce problème d'accessibilité se pose tout particulièrement pour la connexion d'une colonne de direction sur un pignon de crémaillère d'un véhicule automobile. En effet, le point de connexion de ces éléments est situé à proximité des pédales, du support pédalier, du tablier et du joint de tablier du véhicule automobile, d'où des difficultés pour accéder à une vis de serrage avec une visseuse.

Par ailleurs, les systèmes connus ne permettent pas de supprimer tous les jeux entre le premier et le deuxième arbres, par exemple entre le pignon de crémaillère et la colonne de direction. Or la suppression de ces jeux est primordiale pour assurer une transmission optimale des efforts entre le premier et le deuxième arbres. Dans le cas d'une colonne de direction, il est important que les mouvements du volant soient correctement répercutés sur le pignon de crémaillère, sans sensation de jeu pour le conducteur. La suppression des jeux n'est pas optimale avec les systèmes de connexion sans outils de serrage connus.

L'invention vise à pallier cet inconvénient en proposant un système de verrouillage en rotation et en translation de la coopération d'un premier arbre avec un deuxième arbre dans lequel le jeu entre les arbres est supprimé de façon optimale lorsque le système est en position de verrouillage, ce système ne nécessitant pas d'outils de serrage pour assurer le verrouillage.

A cet effet et selon un premier aspect, l'invention concerne un système de verrouillage en rotation et en translation d'un premier arbre avec un deuxième arbre, ledit premier arbre étant sensiblement coaxial au deuxième arbre, une partie dudit premier arbre étant disposée dans un alésage axial dudit deuxième arbre, ledit système comprenant un dispositif de verrouillage mobile entre une position de verrouillage, dans laquelle le premier arbre est solidaire en rotation et en translation du deuxième arbre, et une position de déverrouillage, dans laquelle le premier arbre ne coopère pas avec le deuxième arbre, le premier arbre présentant une partie extrême comprenant deux parois inclinées l'une vers l'autre selon une direction transversale, l'alésage axial comprenant deux parois correspondantes s'étendant dans la même direction que les parois inclinées du premier arbre en regard de celles-ci, le passage en position de verrouillage du dispositif de verrouillage entraînant un déplacement transversal de la partie extrême du premier arbre de sorte à mettre les parois inclinées de ladite partie extrême en appui contre les parois correspondantes de l'alésage axial afin de supprimer sensiblement le jeu entre le premier et le deuxième arbre en position verrouillée.

Ainsi, le premier arbre est introduit dans le deuxième arbre avec un certain jeu avant le verrouillage de ces arbres l'un par rapport à l'autre. Lors du passage en position de verrouillage du dispositif de verrouillage entraîne le déplacement de la partie extrême du premier arbre contre les parois correspondantes du deuxième arbre, ce qui permet de bloquer complètement le premier arbre par rapport au deuxième arbre et de supprimer le jeu entre ces arbres. Les efforts sont alors transmis de façon optimale entre les deux arbres.

Le premier arbre peut présenter une zone de forme sensiblement tronconique selon la direction axiale, ladite zone étant disposée en regard du bord libre de l'alésage axial, ledit bord présentant une forme sensiblement complémentaire de ladite zone tronconique, le passage en position de verrouillage du dispositif de verrouillage entraînant un déplacement axial de la zone tronconique contre le bord de l'alésage, ce déplacement entraînant le déplacement transversal de la partie extrême du premier arbre.

La mise en appui de la zone tronconique contre le bord de l'alésage permet donc le déplacement transversal de la partie extrême du premier arbre. De plus, la zone tronconique du premier arbre permet un guidage de la partie extrême de cet arbre dans l'alésage du deuxième arbre lorsque le premier arbre est introduit dans cet alésage.

Selon un mode de réalisation, le premier arbre comprend au moins un logement, le deuxième arbre comprenant au moins un orifice disposé en regard dudit logement en position de verrouillage, le dispositif de verrouillage comprenant un organe de commande mobile en translation axiale entre la position de déverrouillage et la position de verrouillage, ainsi qu'un organe de verrouillage actionné en translation radiale par la bague entre une position de déverrouillage dans laquelle l'organe de verrouillage est disposé en dehors du logement et une position de verrouillage dans laquelle l'organe de verrouillage traverse l'orifice du deuxième arbre et est disposé dans le logement de sorte à bloquer le premier arbre par rapport au deuxième arbre.

Suivant un autre mode de réalisation, l'organe de commande est un tiroir logé dans un alésage du premier arbre. Le tiroir peut être pourvu d'un alésage transversal de guidage d'un verrou de déclenchement mobile transversalement et coopérant avec une lumière de l'arbre pour verrouiller le tiroir en position déverrouillée, le verrou de déclenchement coopérant par ailleurs avec le deuxième arbre pour libérer le tiroir.

Selon un deuxième aspect, l'invention concerne l'utilisation d'un système de verrouillage tel que décrit ci-dessus pour la connexion d'une colonne de direction sur un pignon de crémaillère d'un véhicule automobile, le premier arbre étant formé par ledit pignon de crémaillère, le deuxième arbre étant formé par une mâchoire comprenant des moyens d'association à la colonne de direction.

Selon un troisième aspect, l'invention concerne la connexion d'un moyeu de volant de direction sur un arbre de direction, le premier arbre étant formé par l'arbre de direction, le deuxième arbre étant formé par le moyeu de volant de direction.

D'autres aspects et avantages de l'invention apparaîtront au cours de la description qui suit, faite en référence aux figures annexées.

La figure 1 est une représentation schématique en coupe axiale d'un système de verrouillage selon l'invention.

La figure 2 est une représentation schématique en coupe transversale du système selon l'axe II-II de la figure 1.

La figure 3 est une représentation schématique en coupe du système selon l'axe III-III de la figure 1.

La figure 4 est une représentation schématique en perspective éclatée d'une variante du système de la figure 1.

La figure 5 est une représentation schématique en coupe axiale d'un système de verrouillage selon un deuxième mode de réalisation de l'invention.

La figure 6 est une vue de côté du système de la figure 5.

La figure 7 illustre un détail du système de la figure 5.

La figure 8 est une représentation en perspective d'un système de verrouillage selon un troisième mode de réalisation de l'invention.

Dans la description, le terme « axial » est défini selon la direction dans laquelle s'étendent le premier et le deuxième arbre, le terme « transversal » est défini par rapport à un plan perpendiculaire à la direction axiale.

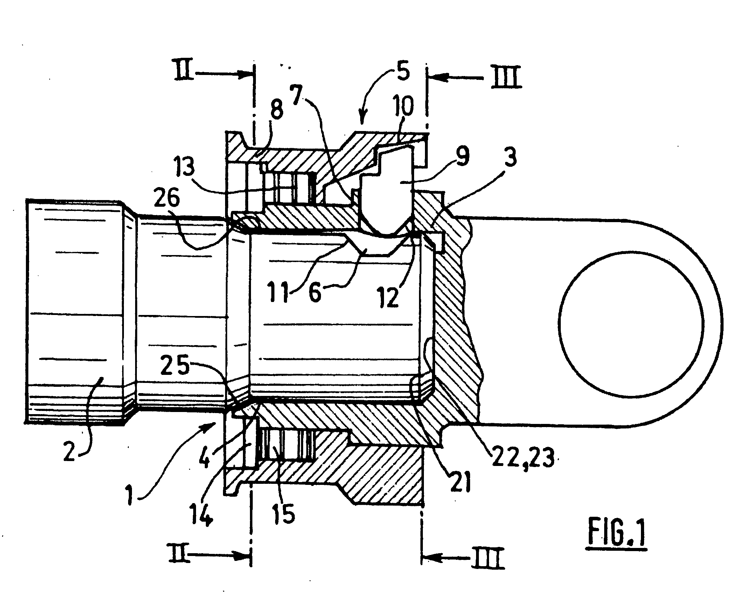

En référence à la figure 1, on décrit un système de verrouillage 1 en rotation et en translation de la coopération d'un premier arbre 2 avec un deuxième arbre 3. Le premier arbre 2 est sensiblement coaxial au deuxième arbre 3 et une partie du premier arbre 2 est disposée dans un alésage axial 4 du deuxième arbre 3.

Le système de verrouillage 1 comprend un dispositif de verrouillage 5 mobile entre une position de verrouillage, dans laquelle le premier arbre 2 est solidaire en rotation et en translation du deuxième arbre 3, et une position de déverrouillage, dans laquelle le premier arbre 2 ne coopère pas avec le deuxième arbre 3.

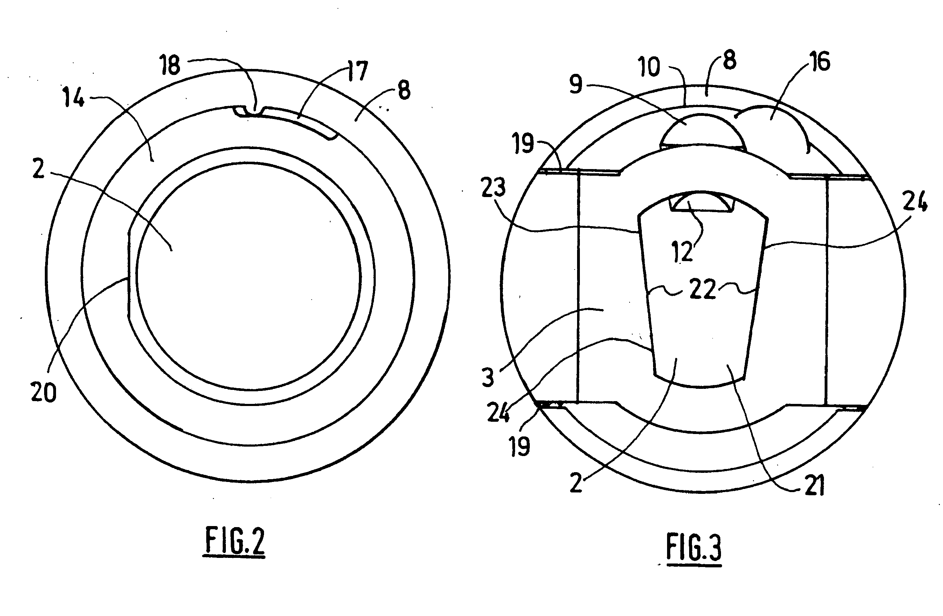

Selon la réalisation représentée sur les figures 1 à 3, le dispositif de verrouillage 5 comprend au moins un logement 6 prévu dans le premier arbre 2, au moins un orifice 7 prévu dans le deuxième arbre 3 et disposé en regard du logement 6 en position de verrouillage. Le dispositif de verrouillage 5 comprend en outre un organe de commande constitué par une bague 8 disposée autour du premier et du deuxième arbres 2 et 3, mobile en translation axiale entre la position de déverrouillage et la position de verrouillage, et un organe de verrouillage 9 actionné en translation transversale par la bague 8 entre une position de déverrouillage, dans laquelle l'organe de verrouillage 9 est disposé en dehors du logement 6 (figure 1), et une position de verrouillage dans laquelle l'organe 9 traverse l'orifice 7 du deuxième arbre 3 et est disposé dans le logement 6 de sorte à bloquer le premier arbre 2 par rapport au deuxième arbre 3 (figure 3).

Afin de permettre l'actionnement en translation transversale de l'organe de verrouillage 9, la bague 8 présente une paroi interne 10 de forme sensiblement tronconique, ladite paroi étant en appui contre l'organe de verrouillage 9, comme représenté sur la figure 1. Ainsi, le déplacement en translation axiale de la bague 8 entraîne une réduction du diamètre de la paroi interne en regard de l'organe de verrouillage 9, ce qui entraîne le déplacement en translation transversale de l'organe de verrouillage 9 lors du passage de la position de déverrouillage à la position de verrouillage.

L'organe de verrouillage 9 peut être un téton ou une bille. Selon la réalisation représentée sur les figures, l'organe 9 comprend une paroi de forme sensiblement complémentaire de la paroi interne 10 de la bague 8. Le logement 6 du premier arbre 2 présente deux parois 11 inclinées de sorte à présenter une forme évasée permettant le guidage de l'organe de verrouillage 9 vers le fond du logement 6 lors du passage en position de verrouillage. A cet effet, l'organe de verrouillage 9 peut comprendre une paroi 12 de forme sensiblement complémentaire à l'une des parois 11 du logement 6. Selon diverses réalisations, l'organe de verrouillage 9 peut être orienté sensiblement perpendiculairement aux premier et deuxième arbres ou peut former un angle par rapport à cette direction perpendiculaire. Cet angle est par exemple compris entre 20° et 30°.

Un ressort 13 est disposé entre la bague 8 et une surface de butée 14, solidaire du deuxième arbre 3 et s'étendant sensiblement transversalement. Le ressort 13 est agencé pour pousser la bague 8 vers sa position de verrouillage, le passage à la position de déverrouillage comprimant le ressort 13. Le ressort 13 est par exemple introduit dans un alésage 15 de la bague 8 prévu autour du deuxième arbre 3 et prend appui contre une paroi transversale de la bague formant un bord de l'alésage 15. Une fois que le ressort 13 a été introduit dans l'alésage 15, la surface de butée 14 peut être sertie autour du deuxième arbre 3. La course de la bague en translation axiale est par exemple sensiblement égale à 2,5 mm.

La bague 8 est mobile en rotation selon une plage déterminée en position de déverrouillage, un dégagement 16 étant prévu dans la paroi interne 10, comme représenté sur la figure 3. Ce dégagement est en regard de l'organe de verrouillage 9 lorsque la bague 8 a subi une rotation sur la plage prédéterminée de sorte que la paroi interne 10 n'est plus en appui contre l'organe de verrouillage 9 et que celui-ci peut passer de sa position de verrouillage à sa position de déverrouillage lorsque l'on retire le premier arbre 2 de l'alésage 4.

A cet effet, la surface de butée 14 présente une lumière 17 dont la largeur définit la plage de rotation de la bague 8. La bague 8 présente une butée 18 introduite dans la lumière 17 lorsque la bague 8 est en position de déverrouillage de sorte à arrêter la rotation de la bague 8 lorsque la butée 18 arrive contre un bord de la lumière 17, comme représenté sur la figure 2. Selon une réalisation, la lumière 17 présente une largeur agencée pour que la bague puisse subir une rotation d'environ 25° entre la position de verrouillage et la position de déverrouillage.

La bague 8 est pourvue de butées 19 venant en appui contre le deuxième arbre 3 lorsque la bague 8 est en position de verrouillage, de sorte à empêcher la rotation de la bague en position de verrouillage.

Afin de positionner correctement la lumière 17 par rapport à la bague 8 et à la butée 18, un détrompeur de position 20 peut être prévu sur le deuxième arbre 3 et sur la surface de butée 14, comme représenté sur la figure 2.

Ainsi, pour faire passer le système de verrouillage en position de déverrouillage, on fait subir une translation axiale à la bague 8 vers sa position de déverrouillage et à l'encontre de l'effort du ressort 13 de sorte à dégager les butées 19. On fait ensuite subir une rotation à la bague 8 de sorte à placer le dégagement 16 en regard de l'organe de verrouillage. Dans cette position, le premier arbre 2 peut être retiré de l'alésage 4, ce qui a pour effet de faire passer l'organe de verrouillage 9 en position de déverrouillage.

Une simple rotation de la bague 8 met l'organe de verrouillage 9 en appui contre la paroi interne 10 de la bague 8 et permet de faire passer le système en position de verrouillage lorsque le premier arbre 2 est introduit dans l'alésage 4 sous l'effet du ressort 13.

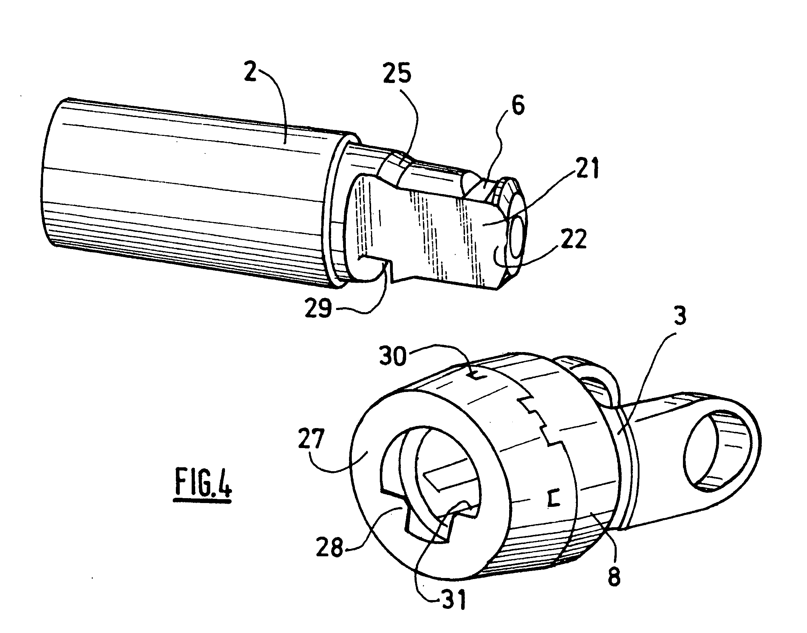

Cependant, lorsque la paroi interne 10 est mise en appui contre l'organe de verrouillage 9 afin de passer en position de verrouillage, il faut s'assurer que le deuxième arbre 3 est bien positionné par rapport au premier arbre 2 afin de ne pas risquer la perte de coopération entre ces deux arbres. Le montage du système se faisant en aveugle, il est prévu selon une variante représentée sur la figure 4 l'utilisation d'une bague de sûreté 27 permettant de s'assurer que le passage en position verrouillée ne peut se faire que si les arbres sont bien positionnés l'un par rapport à l'autre. La bague de sûreté 27 est disposée autour du premier arbre 2 et est solidaire en rotation de la bague 8 par l'intermédiaire d'au moins un tenon 30 solidaire de la bague 27 et introduit dans une gorge correspondante prévue sur la bague 8. La bague de sûreté 27 comprend au moins un décrochement 28 saillant vers l'intérieur d'un orifice de passage 31 du premier arbre 2 dans la bague 27. Le premier arbre 2 est pourvu d'une gorge 29 qui se positionne en regard du décrochement 28 lorsque les arbres 2 et 3 sont correctement positionnés l'un par rapport à l'autre. Ainsi, lorsque les arbres sont correctement positionnés, le décrochement 28 peut s'engager dans la gorge 29 lors de la rotation de la bague 8. Inversement, si les arbres 2 et 3 ne sont pas correctement positionnés l'un par rapport à l'autre, c'est-à-dire si le décrochement n'est pas disposé en regard de la gorge 29, la rotation de la bague 8 est empêchée, le décrochement 28 venant en butée contre le premier arbre 2 de sorte que l'on ne peut pas mettre la paroi interne 10 de la bague 8 en appui contre l'organe de verrouillage 9. On assure ainsi que le passage en position de verrouillage ne peut se faire que si les arbres 2 et 3 sont correctement positionnés l'un par rapport à l'autre.

On décrit à présent la façon dont l'invention permet de supprimer tous les jeux entre le premier et le deuxième arbre 2 et 3 lors du passage du système de verrouillage 1 en position de verrouillage, en référence aux figures 1 et 3.

Au moins la partie extrême 21 du premier arbre 2, s'étendant au-delà du logement 6, comprend deux parois 22 inclinées l'une vers l'autre selon une direction transversale comme représenté sur la figure 3. Ainsi, la partie extrême 21 du premier arbre 2 présente une section de forme sensiblement trapézoïdale. L'alésage axial 4 comprend deux parois 23 correspondantes s'étendant dans la même direction que les parois inclinées 22 en regard de celles-ci. De plus, l'alésage 4 comprend un espace 24 permettant d'introduire le premier arbre 2 dans l'alésage 4 avec un certain jeu. Une fois que le premier arbre 2 a été introduit avec le jeu dans l'alésage 4, le passage en position de verrouillage du dispositif de verrouillage 5 entraîne un déplacement transversal de la partie extrême 21 du premier arbre 2 de sorte à mettre les parois inclinées 22 en appui contre les parois correspondantes 23 afin de supprimer sensiblement le jeu entre le premier et le deuxième arbre en position verrouillée.

A cet effet, le premier arbre 2 présente en outre une zone 25 de forme sensiblement tronconique selon la direction axiale, comme représenté sur la figure 1. Cette zone 25 est disposée en regard du bord libre 26 de l'alésage axial 4 lorsque l'arbre 2 est introduit dans l'alésage 4. Ce bord 26 présente une forme sensiblement complémentaire de la zone tronconique 25 de sorte que le passage en position de verrouillage du dispositif de verrouillage 5 entraîne un déplacement axial de la zone tronconique 25 contre le bord 26 de l'alésage 4, ce déplacement entraînant le déplacement transversal de la partie extrême 21 du premier arbre 2. En effet, selon la réalisation représentée sur les figures, lorsque l'organe de verrouillage 9 pénètre dans le logement 6, il entraîne un déplacement axial de l'arbre 2 vers le fond de l'alésage 4 ce qui place la zone tronconique 25 contre le bord 26 qui entraîne à son tour le déplacement transversal de la partie extrême 21 de l'arbre 2. On supprime ainsi tous les jeux entre le premier et le deuxième arbre 2 et 3.

En outre, la zone tronconique 25 permet un guidage de la partie extrême 21 dans l'alésage 4.

Le système de verrouillage 1 décrit ci-dessus peut s'appliquer tout particulièrement à la connexion d'une colonne de direction sur un pignon de crémaillère d'un véhicule automobile, le premier arbre étant formé par ledit pignon de crémaillère, le deuxième arbre étant formé par une mâchoire de cardan comprenant des moyens d'association à la colonne de direction.

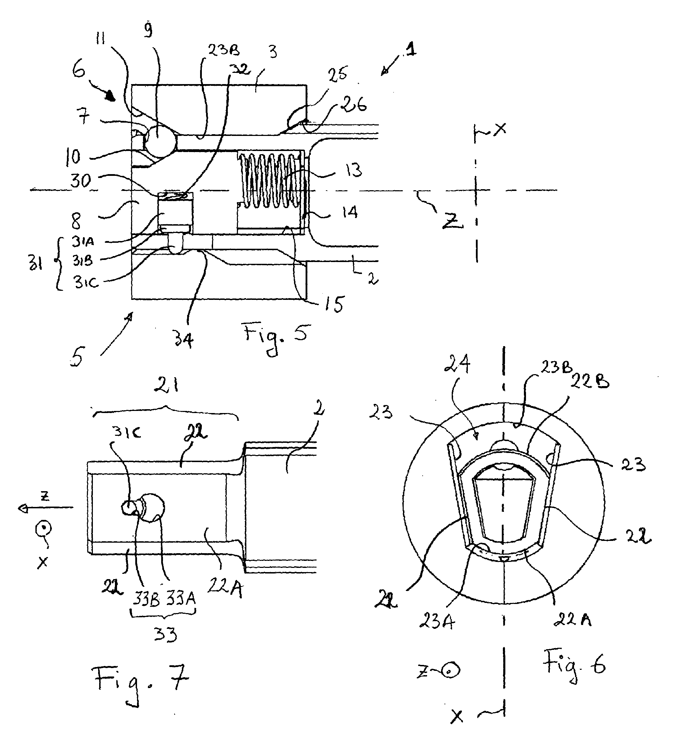

Un deuxième mode de réalisation de l'invention va maintenant être décrit en référence aux figures 5 à 8, les éléments identiques ou similaires aux éléments du premier mode de réalisation portant, autant que possible, des signes de référence identiques.

Le système de verrouillage 1 permet de solidariser en translation et en rotation un premier arbre creux constituant un arbre de colonne de direction 2 avec un deuxième arbre creux constitué par moyeu de volant 3. Le premier arbre 2 définit un axe géométrique de référence Z. Une extrémité 21 de l'arbre 2 est pourvue de deux parois extérieures planes 22 parallèles à l'axe Z et inclinées l'une vers l'autre, et reliée l'une à l'autre par des parois en secteurs de cylindre 22A, 22B, de sorte que l'extrémité 21 présente une section transversale sensiblement trapézoïdale. Par ailleurs, l'arbre 2 comporte un alésage 15 fermé par une plaque 14 formant butée. Dans cet alésage 15 est reçu un organe de commande constitué par un tiroir 8 mobile en translation dans l'alésage 15 suivant l'axe Z mais fixe en rotation, et repoussé dans la direction axiale opposée à la plaque 14 par un ressort de tiroir 13. Le tiroir de commande 8 est pourvu d'une rampe de poussée 10 et d'un alésage latéral 30. La rampe 10 coopère avec un élément de verrouillage 9 constitué ici par une bille guidée dans une lumière de guidage 7 pratiquée dans la paroi. L'alésage latéral 30 est en regard d'une lumière de positionnement 33 pratiquée dans la paroi 22A et présentant une première partie de grande ouverture 33A et une deuxième partie de faible ouverture 33B. Dans l'alésage latéral 30 est logé un verrou de déclenchement constitué par un poussoir 31 pourvu d'un cylindre de guidage 31A de grand diamètre, d'un épaulement d'appui 31 B et d'un téton de plus faible diamètre 31C faisant saillie au travers de la lumière 33. Le verrou de déclenchement 31 est guidé par les parois de l'alésage latéral 30 en translation suivant un axe géométrique X perpendiculaire à l'axe Z. Un ressort de rappel 32 sollicite le poussoir 31 en direction de la lumière 33. L'arbre 2 se prolonge à l'opposé de l'alésage axial 15 par une partie tubulaire de section plus importante, et présente au niveau du changement de section une paroi tronconique d'entraînement 25.

Le moyeu 3 est pourvu quant à lui d'un alésage présentant des parois latérales planes 23 opposées et inclinées l'une vers l'autre, et positionnées l'une par rapport à l'autre de la même manière que les parois inclinées 22. Les parois planes 23 de l'alésage sont reliées l'une à l'autre par deux parois de dégagement 23A, 23B. La paroi 23B est pourvue d'une rampe de verrouillage 11. La paroi 23A est quant à elle pourvue d'un bourrelet 34. Il est à noter que la distance entre les parois 23A, 23B est plus importante que la distance entre les parois 22A, 22B, de sorte qu'existe un volume de dégagement 24 à proximité de la paroi 23B. L'embouchure du moyeu 3 comporte un chanfrein tronconique 26.

Le dispositif fonctionne de la manière suivante. Dans l'état déverrouillé du dispositif 1, c'est-à-dire avant assemblage du moyeu de volant 3 sur l'arbre 2, l'épaulement 31 B du verrou de déclenchement 31 est en prise avec la partie de grande section 33A de la lumière de positionnement 33 et rappelé dans cette position par le ressort de rappel 13. Le verrou de déclenchement 31 maintient alors le tiroir 8 dans une position proche de la plaque 14, le ressort 13 étant bandé. Le téton 31C fait saillie par la lumière de positionnement 33 au-delà de face extérieure de la paroi 22. La bille 9 trouve un volume libre où elle vient se loger, à proximité de la rampe de poussée 10.

On peut alors insérer l'arbre creux 2 dans le moyeu 3 de volant par un mouvement de translation suivant l'axe Z. Au début de l'insertion, l'arbre et le moyeu ont un degré de liberté l'un par rapport à l'autre suivant l'axe X, car l'arbre se trouve partiellement dans le volume de dégagement 24. En poursuivant l'insertion de l'arbre suivant l'axe Z, le téton 31C rencontre le bourrelet 34 de sorte que le verrou de déclenchement 31 rentre progressivement dans l'alésage 30. Dès que l'épaulement 31 B se trouve dégagé de la partie de grand diamètre 33A de la lumière de positionnement, le tiroir 8 recouvre sa liberté de mouvement en translation suivant l'axe Z et est poussé par le ressort de verrouillage 13 dans la position de verrouillage représentée sur la figure 5. La bille 9 est alors poussée partiellement hors de la lumière 7 par la rampe de poussée 10, et vient au contact de la rampe de verrouillage 11. Lorsque l'insertion de l'arbre 2 dans le moyeu 3 se poursuit, la paroi tronconique 25 rencontre le chanfrein 26. L'inclinaison de la paroi tronconique et du chanfrein a pour effet d'entraîner également l'arbre dans la direction X de telle sorte que les parois 22 et 23 se retrouvent plaquées les unes contre les autres. Ce mouvement est assisté par la poussée du ressort de verrouillage 13 sur le tiroir 8 qui induit une poussée de la bille 9 sur la rampe de verrouillage 11 ayant une composante dans la direction de l'axe X tendant à rapprocher les parois 22 des parois 23. Une fois la position finale de la figure 5 atteinte, l'effort exercé par le ressort en statique se traduit par une pression de contact entre les parois 22 et 23 et par une pression de contact entre la paroi tronconique 25 et le chanfrein 26. Le verrou de déclenchement 31 est quant à lui situé dans la partie étroite 33B de la lumière, et son téton 31C est en appui sur la paroi 23A, au-delà du bourrelet 34, dans une position qui sécurise le positionnement des éléments du dispositif en cas de problème du ressort 13.

Il est également possible de combiner le mécanisme de solidarisation de l'invention avec un dispositif de connexion électrique entre les deux arbres, l'un des deux arbres étant pourvu d'un connecteur électrique mâle pourvu d'une ou plusieurs broches de connexion faisant saillie axialement et l'autre arbre étant pourvu d'un connecteur électrique femelle correspondant, permettant une insertion des broches soit lors du mouvement initial d'insertion axiale suivant la direction Z, soit lors du mouvement relatif des arbres dans la direction transversale X. Suivant une variante de réalisation non représentée, l'un au moins des connecteurs fait partie d'un dispositif de liaison électrique entre pièces tournantes. Cette variante s'avère particulièrement intéressante dans l'application de l'invention à la connexion entre un volant de direction et un arbre de direction. Dans cette application, on fixe le dispositif de liaison électrique tournante à l'arbre de direction, puis on effectue le montage entre le moyeu de volant de direction et l'arbre de direction suivant l'invention, par un mouvement d'insertion axiale de l'arbre dans le moyeu comme décrit précédemment suivi d'un mouvement de solidarisation transversal dans la direction X. Ces mouvements assurent simultanément la connexion électrique entre le connecteur solidaire du volant et le connecteur faisant partie du dispositif de liaison électrique tournante. Dans une phase ultérieure d'assemblage de la colonne de direction, l'arbre est monté sur le véhicule et le dispositif de liaison électrique tournante est branché sur le circuit électrique du véhicule, assurant le branchement électrique des éléments électriques solidaires du volant et le circuit électrique du véhicule.

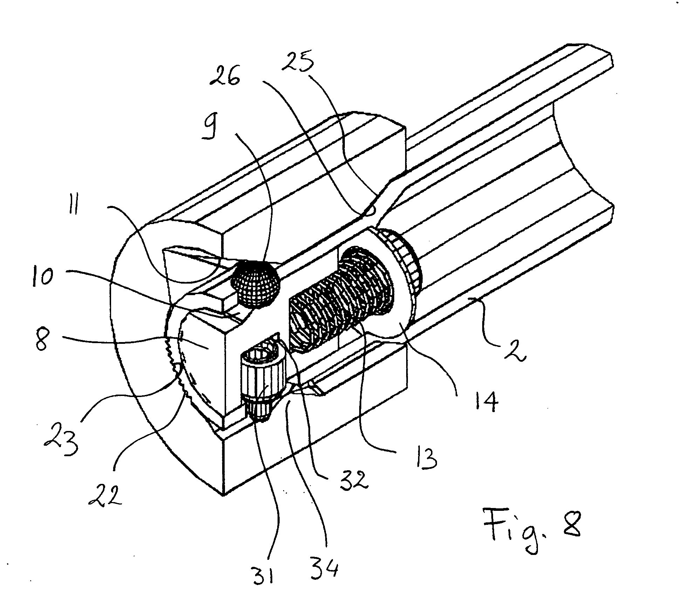

Naturellement, diverses modifications sont possibles. Les parois 22 et 23 ne sont pas nécessairement planes, l'important étant qu'elles aient une forme complémentaire qui permet un emboîtement par mouvement de l'arbre 2 dans la direction X. A titre d'illustration, on a représenté sur la figure 8 une variante de réalisation du deuxième mode de réalisation de l'invention, les mêmes signes de référence ayant été repris pour désigner les parties identiques ou similaires. Cette variante se distingue du système de figures 5 à 7 essentiellement par la forme des parois complémentaires 22 et 23, qui sont réalisées en l'espèce par des cannelures 22 sur une partie inférieure de l'extrémité 21 de l'arbre 22 et des cannelures complémentaires 23 sur la paroi interne du moyeu 3. Naturellement, ces cannelures sont conformées de manière à permettre une insertion transversale des cannelures 22 dans les cannelures 23, suivant l'axe X.

D'autres modifications sont possibles. En particulier, il est possible de combiner entre eux des éléments des différents modes de réalisation de l'invention. Par ailleurs, le dispositif selon le premier mode de réalisation peut être utilisé pour solidariser un arbre de direction à un volant, et le dispositif selon le deuxième mode de réalisation pour solidariser un arbre de direction à une mâchoire de cardan de direction. Il est également possible de mettre en oeuvre le système de l'invention pour solidariser entre eux deux tronçons d'un arbre de direction. Le terme arbre est utilisé dans la demande de manière générale pour désigner un élément destiné à tourner autour d'un axe géométrique de rotation.

## Revendications

1. Système de verrouillage en rotation et en translation d'un premier arbre (2) avec un deuxième arbre (3), ledit premier arbre étant sensiblement coaxial au deuxième arbre (3), une partie dudit premier arbre étant disposée dans un alésage axial (4) dudit deuxième arbre, ledit système comprenant un dispositif de verrouillage (5) mobile entre une position de verrouillage, dans laquelle le premier arbre (2) est solidaire en rotation et en translation du deuxième arbre (3), et une position de déverrouillage, dans laquelle le premier arbre (2) ne coopère pas avec le deuxième arbre (3), où le premier arbre (2) présente une partie extrême (21) comprenant deux parois inclinées (22) l'une vers l'autre selon une direction transversale, l'alésage axial (4) comprenant deux parois correspondantes (23) s'étendant dans la même direction que les parois inclinées (22) du premier arbre (2) en regard de celles-ci ledit système étant **caractérisé en ce que** le passage en position de verrouillage du dispositif de verrouillage (5) entraînant un déplacement transversal de la partie extrême (21) du premier arbre (2) de sorte à mettre les parois inclinées (22) de ladite partie extrême en appui contre les parois correspondantes (23) de l'alésage axial (4) afin de supprimer sensiblement le jeu entre le premier et le deuxième arbre (2, 3) en position verrouillée.

2. Système de verrouillage selon la revendication 1, **caractérisé en ce que** le premier arbre (2) présente une zone (25) de forme sensiblement tronconique selon la direction axiale, ladite zone étant disposée en regard d'un bord libre (26) de l'alésage axial (4), ledit bord présentant une forme sensiblement complémentaire de ladite zone tronconique, le passage en position de verrouillage du dispositif de verrouillage (5) entraînant un déplacement axial de la zone tronconique (25) contre le bord (26) de l'alésage (4), ce déplacement entraînant le déplacement transversal de la partie extrême (21) du premier arbre (2).

3. Système de verrouillage selon la revendication 1 ou 2, **caractérisé en ce que** le premier arbre (2) comprend au moins un logement (6), le deuxième arbre (3) comprenant au moins un orifice (7) disposé en regard dudit logement en position de verrouillage, le dispositif de verrouillage (5) comprenant un organe de commande mobile en translation axiale entre la position de déverrouillage et la position de verrouillage, et un organe de verrouillage (9) actionné en translation transversale par l'organe de commande (8) entre une position de déverrouillage, dans laquelle l'organe de verrouillage (9) est disposé en dehors du logement (6), et une position de verrouillage, dans laquelle l'organe (9) traverse l'orifice (7) du deuxième arbre (3) et est disposé dans le logement (6) de sorte à bloquer le premier arbre (2) par rapport au deuxième arbre (3).

4. Système de verrouillage selon la revendication 3, **caractérisé en ce que** l'organe de commande (8) présente une paroi interne (10) formant rampe, ladite rampe étant en appui contre l'organe de verrouillage (9) de sorte que le déplacement en translation axiale de l'organe de commande (8) entraîne le déplacement en translation transversale de l'organe de verrouillage (9) lors du passage de la position de déverrouillage à la position de verrouillage.

5. Système de verrouillage selon l'une quelconque des revendications 3 ou 4, **caractérisé en qu'**un ressort (13) est disposé entre l'organe de commande (8) et une surface de butée (14) solidaire du deuxième arbre (3), ledit ressort étant agencé pour pousser l'organe de commande (8) vers sa position de verrouillage, le passage à la position de déverrouillage comprimant ledit ressort.

6. Système de verrouillage selon l'une quelconque des revendications 3 à 5, **caractérisé en ce que** l'organe de commande est une bague (8) disposée autour du premier et du deuxième arbre (2, 3).

7. Système de verrouillage selon la revendication 6 dépendant au moins de la revendication 4, **caractérisé en ce que** la bague (8) est mobile en rotation selon une plage déterminée en position de déverrouillage, un dégagement (16) étant prévu dans la paroi interne (10), ledit dégagement étant en regard de l'organe de verrouillage (9) lorsque la bague (8) a subi une rotation sur ladite plage de sorte que la paroi interne (10) n'est plus en appui contre l'organe de verrouillage (9) et que celui-ci peut passer de sa position de verrouillage à sa position de déverrouillage.

8. Système de verrouillage selon la revendication 7 dépendant au moins de la revendication 5, **caractérisé en ce que** la surface de butée (14) présente une lumière (17) dont la largeur définit la plage de rotation de la bague (8), ladite bague présentant une butée (18) introduite dans ladite lumière lorsque la bague (8) est en position de déverrouillage de sorte à arrêter la rotation de ladite bague lorsque la butée (18) arrive contre un bord de la lumière (17).

9. Système de verrouillage selon l'une quelconque des revendications 7 ou 8, **caractérisé en ce que** le dispositif de verrouillage (5) comprend une bague de sûreté (27) solidaire en rotation de la bague (8), ladite bague de sûreté entourant le premier arbre (2) et comprenant au moins un décrochement (28), le premier arbre (2) étant pourvu d'une gorge (29) dans laquelle ledit décrochement peut s'engager, ladite bague de sûreté empêchant la rotation de la bague (8) si le décrochement (28) n'est pas disposé en regard de la gorge (29).

10. Système de verrouillage selon l'une quelconque des revendications 7 à 9, **caractérisé en ce que** la bague (8) est pourvue de butées (19) venant en appui contre le deuxième arbre (3) lorsque la bague (8) est en position de verrouillage, de sorte à empêcher la rotation de ladite bague en position de verrouillage.

11. Système de verrouillage selon l'une quelconque des revendications 3 à 9, **caractérisé en ce que** le logement (6) du premier arbre (2) présente deux parois (11) inclinées de sorte à présenter une forme évasée permettant le guidage de l'organe de verrouillage (9) vers le fond du logement (6) lors du passage en position de verrouillage.

12. Système selon l'une quelconque des revendications 3 ou 4, **caractérisé en ce que** l'organe de commande est un tiroir (8) logé dans un alésage (15) du premier arbre (2).

13. Système selon la revendication 12, **caractérisé en ce que** le tiroir (8) est pourvu d'un alésage transversal (30) de guidage d'un verrou de déclenchement mobile transversalement et coopérant avec une lumière de l'arbre pour verrouiller le tiroir en position déverrouillée, le verrou de déclenchement coopérant par ailleurs avec le deuxième arbre (3) pour libérer le tiroir (8).

14. Système selon l'une quelconque des revendications précédentes, **caractérisé en ce que** l'un des premier et deuxième arbres (2, 3) est pourvu d'au moins une broche de connexion électrique faisant saillie axialement vers l'autre arbre, l'autre arbre étant pourvu d'un connecteur femelle correspondant.

15. Système selon la revendication 14, **caractérisé en ce que** l'un des deux connecteurs fait partie d'un dispositif de liaison électrique tournante.

16. Utilisation d'un système de verrouillage (1) selon l'une quelconque des revendications 1 à 15 pour la connexion d'une colonne de direction sur un pignon de crémaillère d'un véhicule automobile, le premier arbre (2) étant formé par ledit pignon de crémaillère, le deuxième arbre (3) étant formé par une mâchoire comprenant des moyens d'association à la colonne de direction.

17. Utilisation d'un système de verrouillage (1) selon l'une quelconque des revendications 1 à 15 pour la connexion d'un moyeu de volant de direction sur un arbre de direction, le premier arbre (2) étant formé par l'arbre de direction, le deuxième arbre (3) étant formé par le moyeu de volant de direction.

## Claims

1. A system for locking in rotation and in translation a first shaft (2) with a second shaft (3), with said first shaft being substantially coaxial to the second shaft (3), a part of said first shaft being positioned in an axial bore (4) of said second shaft, said system comprising a locking device (5) movable between a locking position, wherein the first shaft (2) is integral, in rotation and in translation, with said second shaft (3), and an unlocking position, wherein the first shaft (2) does not cooperate with the second shaft (3), where the first shaft (2) has an end part (21) comprising two walls (22) sloping towards each other along a transversal direction, the axial bore (4) comprising two matching walls (23) extending in the same direction as the sloping walls (22) of the first shaft (2 opposite these, said system being **characterized in that** the switching to the locking position of the locking device (5) entails a transversal displacement of the end part (21) of the first shaft (2) so as to cause the sloping walls (22) of said end part to rest against the matching walls (23) of the axial bore (4) so as to substantially eliminate the clearance between the first and the second shafts (2, 3) in the locked position.

2. A locking system according to claim 1, **characterized in that** the first shaft (2) has a zone (25) having a substantially tapered shape along the axial direction, said zone being positioned opposite a free edge (26) of the axial bore (4), said edge having a shape substantially matching said tapered zone, the switching to the locking position of the locking device (5) entailing an axial displacement of the tapered zone (25) against the edge (26) of the bore (4), this displacement entailing the transversal displacement of the end part (21) of the first shaft (2).

3. A locking system according to claim 1 or 2, **characterized in that** the first shaft (2) includes at least one recess (6), the second shaft (3) including at least one hole (7) positioned opposite said recess, in locking position, the locking device (5) including a control member movable in axial translation between the unlocking position and the locking position, and a locking member (9) actuated in transversal translation by the control member (8) between an unlocking position wherein the locking member (9) is positioned outside the recess (6), and a locking position wherein the member (9) goes through the hole (7) of the second shaft (3) and is positioned in the recess (6) so as to lock the first shaft (2) with respect to the second shaft (3).

4. A locking system according to claim 3, **characterized in that** the control member (8) has an internal wall (10) forming a ramp, said ramp resting against the locking member (9) so that the displacement in axial translation of the control member (8) entails the displacement in transversal translation of the locking member (9) upon the switching from the unlocking position to the locking position.

5. A locking system according to any one of claims 3 or 4, **characterized in that** a spring (13) is positioned between the control member (8) and a thrust surface (14) integral with the second shaft (3), with said spring being so arranged as to push the control member (8) towards the locked position thereof, the switching to the unlocking position compressing said spring.

6. A locking system according to any one of claims 3 to 5, **characterized in that** the control member (8) is a ring (8) positioned about the first and the second shaft (2, 3).

7. A locking system according to claim 6, depending at least on claim 4, **characterized in that** the ring (8) is movable in rotation according to a determined range in the unlocking position, a recess (16) being provided in the internal wall (10), said recess being opposite the locking member (9) when the ring (8) has rotated along said range so that the internal wall (10) no longer rests against the locking member (9) and that the latter can switch from its locking position to its unlocking position.

8. A locking system according to claim 7, depending at least on claim 5, **characterized in that** the thrust surface (14) has an opening (17) the width of which defines the rotation range of the ring (8), said ring having a stopper (18) introduced into said opening when the ring (8) is in the unlocking position so as to stop the rotation of said ring when the stopper (18) abuts against an edge of the opening (17).

9. A locking system according to any one of claims 7 or 8, **characterized in that** the locking device (5) includes a safety ring (27) integral in rotation with the ring (8), said safety ring surrounding the first shaft (2) and including at least a shoulder (28), the first shaft (2) being provided with a groove (29) wherein said shoulder can engage, with said safety ring preventing the rotation of the ring (8) if the shoulder (28)is not positioned opposite the groove (29).

10. A locking system according to any one of claims 7 to 9, **characterized in that** the ring (8) is provided with stoppers (19) resting against the second shaft (3) when the ring (8) is in the locking position, so as to prevent the rotation of said ring in the locking position.

11. A locking system according to any one of claims 3 to 9, **characterized in that** the recess (6) of the first shaft (2) has two walls (11) sloping so as to have a flaring shape enabling the guiding of the locking member (9) towards the bottom of the recess (6) upon the switching to the locking position.

12. A system according to any one of claims 3 or 4, **characterized in that** the control member is a slide valve (8) accommodated in a bore (15) of the first shaft (2).

13. A locking system according to claim 12, **characterized in that** the slide valve (8) is provided with a transversal bore (30) for guiding a transversally movable triggering lock and cooperating with an opening in the shaft for locking the slide valve in the unlocked position, with the triggering lock additionally further cooperating with the second shaft (3) for releasing the slide valve (8).

14. A system according to any one of the preceding claims, **characterized in that** one of the first and second shafts (2, 3) is provided with at least one electrical connection pin axially protruding toward the other shaft, with the other shaft being provided with a matching female connector.

15. A system according to claim 14, **characterized in that** one of the two connectors belongs to a rotating electrical wiring device.

16. The utilization of a locking system (1) according to any one of claims 1 to 15, for the connection of a steering column to a pinion of a gear rack in a motor vehicle, with the first shaft (2) being formed by said pinion of a gear rack, and the second shaft (3) being formed by jaws including means for association with the steering column.

17. The utilization of a locking system (1) according to any one of claims 1 to 15, for the connection of the hub of a steering wheel to a steering shaft, with the first shaft (2) being formed by the steering wheel, and the second shaft (3) being formed by the hub of the steering wheel.

## Patentansprüche

1. System zur Arretierung in Drehung und in Translation eines ersten Schafts (2) mit einem zweiten Schaft (3), wobei der besagte erste Schaft deutlich koaxial zum zweiten Schaft (3) steht, ein Teil des besagten ersten Schafts in einer axialen Bohrung (4) des besagten zweiten Schafts angeordnet ist, wobei das besagte System eine Vorrichtung zur Arretierung (5) umfaßt, die zwischen einer Arretierungsposition, in der der erste Schaft (2) in Drehung und in Translation fest mit dem zweiten Schaft (3) verbunden ist, und einer Freigabeposition, in der der erste Schaft (2) nicht mit dem zweiten Schaft (3) zusammenwirkt, beweglich ist, wo der erste Schaft (2) einen Endteil (21) aufweist, der zwei in einer Querrichtung zueinander geneigte Wände (22) umfaßt, wobei die axiale Bohrung (4) zwei entsprechende Wände (23) umfaßt, die sich in der gleichen Richtung erstrecken, wie die geneigten Wände (22) des ersten Schafts(2) diesen gegenüber, wobei das besagte System **dadurch gekennzeichnet ist, daß** der Übergang der Vorrichtung zur Arretierung (5) in Arretierungsposition eine Querverschiebung des Endteils (21) des ersten Schafts (2) mit sich führt, so daß die geneigten Wände (22) des besagten Endteils gegen die entsprechenden Wände (23) der axialen Bohrung (4) anliegen, um deutlich den Spielraum zwischen dem ersten und dem zweiten Schaft (2, 3) in arretierter Position zu eliminieren.

2. System zur Arretierung nach Anspruch 1, **dadurch gekennzeichnet, daß** der erste Schaft (2) eine Zone (25) in deutlich kegelstumpfartiger Form in axialer Richtung aufweist, wobei die besagte Zone gegenüber einer freien Kante (26) der axialen Bohrung (4) angeordnet ist, wobei die besagte Kante eine deutlich ergänzende Form zur besagten kegelstumpfförmigen Zone aufweist, wobei der Übergang der Vorrichtung zur Arretierung (5) in Arretierungsposition eine axiale Verschiebung der kegelstumpfförmigen Zone (25) gegen die Kante (26) der Bohrung (4) mit sich führt, wobei diese Verschiebung die Querverschiebung des Endteils (21) des ersten Schafts (2) mit sich führt.

3. System zur Arretierung nach Anspruch 1 oder 2, **dadurch gekennzeichnet, daß** der erste Schaft (2) mindestens eine Aufnahme (6) umfaßt, der zweite Schaft (3) mindestens eine Öffnung (7) umfaßt, die in arretierter Position gegenüber der besagten Aufnahme angeordnet ist, wobei die Vorrichtung zur Arretierung (5) ein Steuerorgan umfaßt, das in axialer Translation zwischen der Freigabeposition und der Arretierungsposition beweglich ist, und ein Arretierungsorgan (9), das vom Steuerorgan (8) zwischen einer Freigabeposition, in der das Arretierungsorgan (9) außerhalb der Aufnahme (6) angeordnet ist, und einer Arretierungsposition, in der das Organ (9) die Öffnung (7) des zweiten Schafts (3) durchquert, in Quertranslation betätigt wird und in der Aufnahme (6) angeordnet wird, so daß der erste Schaft (2) im Verhältnis zum zweiten Schaft (3) blockiert wird.

4. System zur Arretierung nach Anspruch 3, **dadurch gekennzeichnet, daß** das Steuerorgan (8) eine innere Wand (10) aufweist, die eine Rampe bildet, wobei die besagte Rampe am Arretierungsorgan (9) anliegt, so daß beim Übergang der Freigabeposition zur Arretierungsposition die Verschiebung des Steuerorgans (8) in axialer Translation die Verschiebung des Arretierungsorgans (9) in transversaler Translation mit sich führt.

5. System zur Arretierung nach einem beliebigen der vorstehenden Ansprüche 3 oder 4, **dadurch gekennzeichnet, daß** eine Feder (13) zwischen dem Steuerorgan (8) und einer mit dem zweiten Schaft (3) fest verbundenen Anschlagfläche (14) angeordnet ist, wobei die besagte Feder so gestaltet ist, daß sie das Steuerorgan (8) in seine Arretierungsposition schiebt, wobei der Übergang in die Arretierungsposition die besagte Feder komprimiert.

6. System zur Arretierung nach einem beliebigen der vorstehenden Ansprüche 3 bis 5, **dadurch gekennzeichnet, daß** das Steuerorgan ein um den ersten Schaft und den zweiten Schaft (2, 3) angeordneter Ring (8) ist.

7. System zur Arretierung nach Anspruch 6 in Abhängigkeit von mindestens dem Anspruch 4, **dadurch gekennzeichnet, daß** der Ring (8) in Drehung nach einer in Freigabeposition bestimmten Ebene beweglich ist, wobei ein Freiraum (16) in der Innenwand (10) vorgesehen ist, wobei der besagte Freiraum sich gegenüber dem Arretierungsorgan (9) befindet, wenn der Ring (8) eine Drehung auf der besagten Ebene beschrieben hat, so daß die Innenwand (10) nicht mehr am Arretierungsorgan (9) anliegt und dieses von seiner Arretierungsposition zu seiner Freigabeposition übergehen kann.

8. System zur Arretierung nach Anspruch 7 in Abhängigkeit von mindestens dem Anspruch 5, **dadurch gekennzeichnet, daß** die Anschlagfläche (14) eine Öffnung (17) aufweist, deren Breite die Rotationsebene des Rings (8) definiert, wobei der besagte Ring einen Anschlag (18) aufweist, der in die besagte Öffnung eingeführt wird, wenn der Ring (8) in Freigabeposition ist, so daß die Drehung des besagten Rings arretiert wird, wenn der Anschlag (18) an der Kante der Öffnung (17) ankommt.

9. System zur Arretierung nach einem beliebigen der vorstehenden Ansprüche 7 oder 8, **dadurch gekennzeichnet, daß** die Arretierungsvorrichtung (5) einen Sicherheitsring (27) umfaßt, der in Drehung fest mit dem Ring (8) verbunden ist, wobei der besagte Sicherheitsring den ersten Schaft (2) umgibt und mindestens einen Absatz (28) umfaßt, wobei der erste Schaft (2) mit einer Kehle (29) versehen ist, in die der besagte Absatz eingreifen kann, wobei der besagte Sicherheitsring die Drehung des Rings (8) verhindert, wenn der Absatz (28) nicht gegenüber der Kehle (29) angeordnet ist.

10. System zur Arretierung nach einem beliebigen der vorstehenden Ansprüche 7 bis 9, **dadurch gekennzeichnet, daß** der Ring (8) mit Anschlägen (19) versehen ist, die am zweiten Schaft (3) anliegen, wenn der Ring (8) in Arretierposition ist, so daß die Drehung des besagten Rings in Arretierungsposition verhindert wird.

11. System zur Arretierung nach einem beliebigen der vorstehenden Ansprüche 3 bis 9, **dadurch gekennzeichnet, daß** die Aufnahme (6) des ersten Schafts (2) zwei so geneigte Wände (11) aufweist, daß sie eine konisch erweiterte Form aufweisen, die beim Übergang in die Arretierungsposition die Führung des Arretierungsorgans (9) zum Boden der Aufnahme (6) ermöglicht.

12. System nach einem beliebigen der vorstehenden Ansprüche 3 oder 4, **dadurch gekennzeichnet, daß** das Steuerorgan ein Einschub (8) ist, der in einer Bohrung (15) des ersten Schafts (2) untergebracht ist.

13. System nach Anspruch 12, **dadurch gekennzeichnet, daß** der Einschub (8) mit einer Querbohrung (30) zur Führung eines Auslöseriegels versehen ist, der in Querrichtung beweglich ist und mit einer Öffnung des Schafts zusammenwirkt, um den Einschub in Freigabeposition zu arretieren, wobei der Auslöseriegel ferner zur Freigabe des Einschubs (8) mit dem zweiten Schaft (3) zusammenwirkt.

14. System nach einem beliebigen der vorstehenden Ansprüche, **dadurch gekennzeichnet, daß** einer des ersten und des zweiten Schafts (2, 3) mit mindestens einem Stift für den elektrischen Anschluß versehen ist, der axial zum anderen Schaft einen Vorsprung bildet, wobei der andere Schaft mit einer entsprechenden Anschlußbuchse versehen ist.

15. System nach Anspruch 14, **dadurch gekennzeichnet, daß** einer der beiden Verbinder zu einer Vorrichtung einer drehenden elektrischen Verbindung gehört.

16. Benutzung eines Systems zur Arretierung (1) nach einem beliebigen der vorstehenden Ansprüche 1 bis 15 für den Anschluß einer Lenksäule auf einem Ritzel einer Zahnstange eines Kraftfahrzeugs, wobei der erste Schaft (2) von besagtem Ritzel einer Zahnstange gebildet wird und der zweite Schaft (3) von einer Klemme gebildet wird, die Mittel zur Verbindung mit der Lenksäule umfaßt.

17. Benutzung eines Systems zur Arretierung (1) nach einem beliebigen der vorstehenden Ansprüche 1 bis 15 für den Anschluß einer Nabe eines Lenkrads an einen Lenkschaft, wobei der erste Schaft (2) vom Lenkschaft gebildet wird du der zweite Schaft (3) von der Nabe des Lenkrads gebildet wird.
